# EUROPEAN PATENT SPECIFICATION

(11) **EP 4 294 678 B1**
(45) Date of publication and mention of the grant of the patent: **02.07.2025**
(21) Application number: 22704382.5
(22) Date of filing: 09.02.2022
(51) Int. Cl.: B60R 19/18, B60R 19/34

(54) **CRASH BEAM AND VEHICLE**
CRASHBALKEN UND FAHRZEUG
PROFILÉ DE COLLISION ET VÉHICULE

(30) Priority: 20.02.2021 CN 202110190904
(43) Date of publication of application: 27.12.2023
(73) Proprietor: Stellantis Auto SAS, 78300 Poissy (FR)
(72) Inventor: WANG, Zi Ye, SHANGHAI, 200030 (CN); ZHOU, Zhongxiang, SHANGHAI, 200030 (CN); LI, Bing, SHANGHAI, 200030 (CN); WANG, Wei, SHANGHAI, 200030 (CN); ZHANG, Ying, SHANGHAI, 200030 (CN)
(74) Representative: BCIP
(86) International application number: PCT/EP2022/053074
(87) International publication number: WO 2022/175143

(56) References cited:
- EP-A1- 2 979 932
- WO-A1-2012/101923
- US-B1- 9 199 592

## Description

### FIELD OF TECHNOLOGY

The present application relates to the field of vehicle parts, in particular to a crash beam and a vehicle, and more particularly to a crash beam and a vehicle capable of improving safety in both low-speed and high-speed crashes.

### BACKGROUND

At present, with the continuous development of vehicle technology, people are increasingly demanding the safety performance of vehicles. Due to the high speed of a vehicle, a considerable impact force will be generated when the vehicle crashes, hence the crash function of the vehicle plays an essential role in the safety of the vehicle.

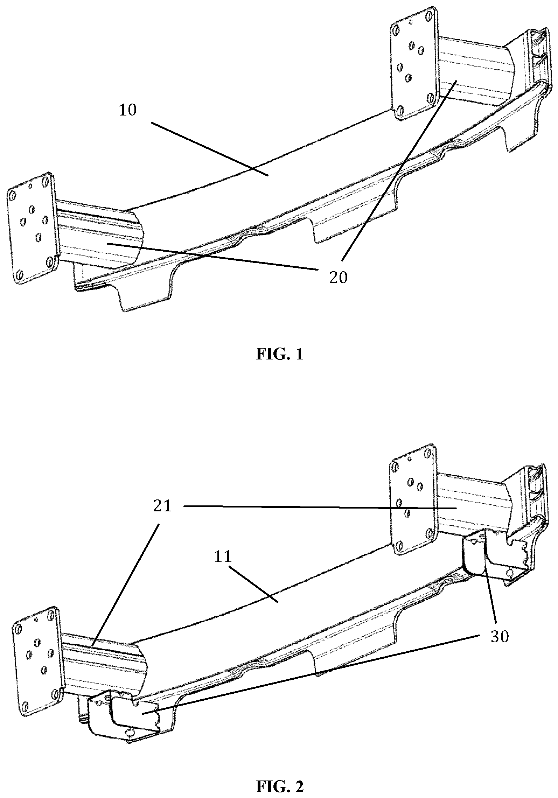

A crash beam of a vehicle is an apparatus employed to reduce the crash energy absorbed by the vehicle when it is crashed. As shown in FIG. 1, the traditional crash beam of vehicle is usually composed of a crash beam body 10 and a crash box 20, both of which are able to effectively absorb the crash energy when the vehicle is involved in a low-speed or high-speed crash, thereby producing a protective effect on the vehicle.

When the vehicle is crashed, the energy is firstly transferred to the outermost crash beam body 10, and then to the crash box 20, such that the crash energy is absorbed through the collapse and destruction of the crash box 20. However, only by virtue of the crash beam body 10 and the crash box 20, ideal crash effects cannot be exerted in the existing vehicles during both low-speed and high-speed crashes. In order to ensure that the crash beam possess excellent crash performance, the crash beam needs to be reinforced globally, whereas such reinforcement will lead to an increase in the manufacturing cost of the crash beam.

### SUMMARY

### (I) Technical problems to be solved

A first objective of the present application is to provide a crash beam having improved crash performance through a beam support, so as to solve the problem of high cost caused by redesigning the entire crash beam when reinforcing the crash beam.

A second objective of the present application is to provide a vehicle including a crash beam having improved crash performance through a beam support, so as to solve the problem of high cost caused by redesigning the entire crash beam when reinforcing the crash beam.

From the prior art EP2979932A1, WO2012/101923 and US9199592B1 are known, where the document EP2979932A1 discloses a crash beam according to the preamble of claim 1.

### (II) Technical solutions

In order to solve the above-mentioned technical problems, the present application provides an crash beam, including: an crash beam body, extending along a width direction of a vehicle; an crash box, formed by extending inwardly along a longitudinal direction of the vehicle at both ends of the crash beam body and approximately perpendicular to the crash beam body; and a beam support, disposed below a connecting part of the crash beam body and the crash box and including a first part and a second part perpendicular to each other, wherein an end of the first part is connected to the crash box, the second part is connected to the crash beam body, and another end of the first end and another end of the second are connected to each other.

The first part includes a first setting surface contacting and connecting to a lower surface of the crash box, and a first connecting surface extending downward from both ends of the first setting surface and perpendicular to the first setting surface and the second part includes a second setting surface contacting and connecting to an inner surface of the crash beam body, and a second connecting surface extending inwardly from both ends of the second setting surface and perpendicular to the second setting surface wherein
the first connecting surface and the second connecting surface are connected to each other, and a weakening cut is formed at a position where the first connecting surface is connected to the second connecting surface.

In an embodiment, a first reinforcing rib is formed at a position where the first setting surface is connected to the first connecting surface.

In an embodiment, a second reinforcing rib is formed at a position where the second setting surface is connected to the second connecting surface.

In an embodiment, the first setting surface is connected to the lower surface of the crash box by bolts.

In an embodiment, the second setting surface is connected to the inner surface of the crash beam body by bolts.

In an embodiment, the first part and the second part are integrally formed.

The present application further provides a vehicle, including the crash beam according to embodiments of the present application.

### (III) Beneficial effects

The present application provides a crash beam and a vehicle, the crash beam including: a crash beam body, extending along a width direction of a vehicle; a crash box, formed by extending inwardly along a longitudinal direction of the vehicle at both ends of the crash beam body and approximately perpendicular to the crash beam body; and a beam support, disposed below a connecting part of the crash beam body and the crash box and including a first part and a second part perpendicular to each other, wherein the first part and the second part have ends connected to the crash box and the crash beam body, respectively, and another ends connected to each other. With the crash beam according to the present application, the crash performance can be enhanced in both low-speed and high-speed crashes, and the crash beam does not need to be reinforced globally, so that the manufacturing cost can be saved while ensuring safety.

### BRIEF DESCRIPTION OF THE DRAWINGS

The above-mentioned and other objectives, features and other advantages of the present disclosure will be more clearly understood from the following detailed description, taken in conjunction with the accompanying drawings, wherein:
FIG. 1 is a schematic diagram showing a crash beam in the related art;
FIG. 2 is a schematic diagram showing a crash beam according to an embodiment of the present application;
FIG. 3 is a schematic diagram showing a connection of a beam support of a crash beam according to an embodiment of the present application; and
FIG. 4 is a schematic diagram showing a beam support of a crash beam according to an embodiment of the present application.

### Reference Numerals:

10 and 11: crash beam body; 20 and 21: crash box; 30: beam support; 31: first part; 311: first setting surface; 312: first connecting surface; 313: first reinforcing rib; 32: second part; 321: second setting surface; 322: second connecting surface; 323: second reinforcing rib; 33: weakening cut.

### DETAILED DESCRIPTION

In order to make the objectives, technical solutions and advantages of the embodiments of the present application more clear, the technical solutions in the embodiments of the present application will be clearly and completely described below in conjunction with the accompanying drawings in the embodiments of the present application. Obviously, the described embodiments are some embodiments of the present application, but not all embodiments. Based on the embodiments of the present application, all other embodiments obtained by those of ordinary skill in the art without creative work fall within the protection scope of the present application according to the appended claims.

In the description of the present application, it should be noted that, the orientation or positional relationship indicated by terms "center", "longitudinal", "lateral", "upper", "lower", "front", "rear", "left", "right", "vertical", "horizontal", "top", "bottom", "inner", and "outer" are based on the orientation or positional relationship shown in the accompanying drawings, and are only for the convenience of describing the present application and description simplification, rather than to indicate or imply that the device or element referred to should have a particular orientation, be constructed and operated in a particular orientation, and therefore should not be construed as limiting the present application. Furthermore, the terms "first", "second", "third" and the like are used for descriptive purposes only and should not be construed as indicating or implying relative importance.

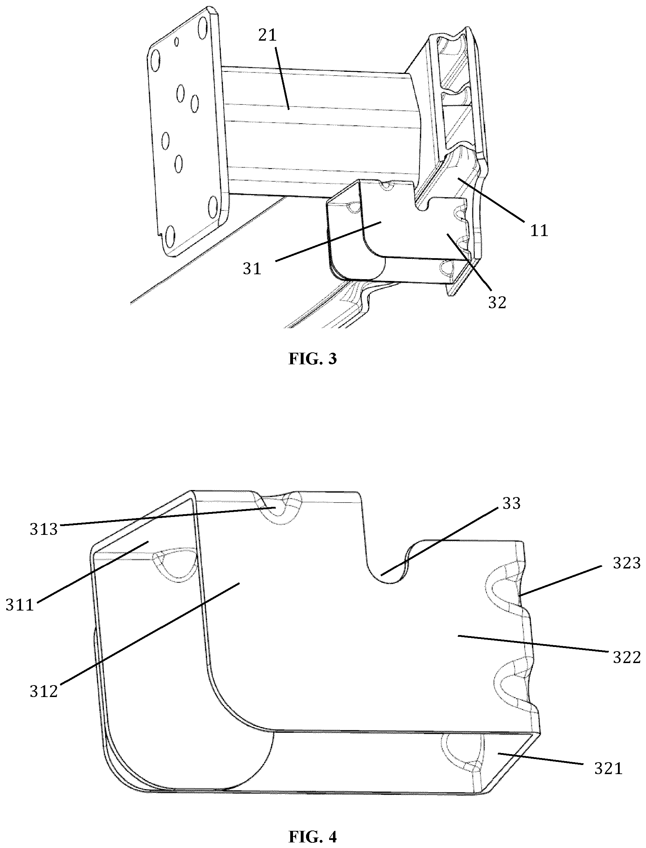

FIG. 2 is a schematic diagram showing a crash beam according to an embodiment of the present application; FIG. 3 is a schematic diagram showing a connection of a beam support of a crash beam according to an embodiment of the present application; and FIG. 4 is a schematic diagram showing a beam support of a crash beam according to an embodiment of the present application.

According to the present application, provided is a crash beam, including a crash beam body 11, a crash box 21 and a beam support 30. Specifically, the crash beam body 11 extends along a width direction of a vehicle, and acts as a first buffer when the vehicle crashes. The crash boxes 21 are disposed at left and right ends of the crash beam body 11, and respectively extend inwardly along a longitudinal direction of the vehicle and approximately perpendicular to the crash beam body 11, namely be formed by extending along a length of the vehicle (X direction) toward an interior of the vehicle. The crash energy received by the crash beam body 11 is transferred to the crash boxes 21 at the left and right ends thereof, so that the crash boxes 21 are collapsed and destroyed due to energy absorption, thereby further offsetting the crash energy.

Further, the crash beam is provided with a beam support 30 which is disposed below a connecting part of the crash beam body 11 and the crash boxes 21, and respectively connected with the crash beam body 11 and the crash boxes 21 to form an "L" shape. Specifically, each beam support 30 includes a first part 31 and a second part 32 perpendicular to each other, wherein the first part 31 and the second part 32 have ends connected to a lower surface of the crash box 21 and an inner surface of the crash beam body 11, respectively, and another ends connected to each other, so that the beam support 30 is formed into an "L" shape.

Further, the beam support 30 may be a structure formed by bending a sheet of metal material into a "Π" shape. The first part 31 includes a first setting surface 311 contacting and connecting with a lower surface of the crash box 21, and a first connecting surface 312 extending downward from both ends of the first setting surface 311 and perpendicular to the first setting surface 311.

The second part 32 includes a second setting surface 321 contacting and connecting to an inner surface of the crash beam body 11, and a second connecting surface 322 extending inwardly from both ends of the second setting surface 321 (i.e., along an interior direction of the vehicle) and perpendicular to the second setting surface 321.

The other end of the first connecting surface 312 and the other end of the second connecting surface 322 are connected to each other, so that the beam support 30 in the X direction has an "L" shaped cross-section.

Further, a weakening cut 33 is formed at a position where the first connecting surface 312 and the second connecting surface 322 are connected to each other. Specifically, an outer edge of the first connecting surface 312 and an upper edge of the second connecting surface 322 are connected to each other, an inner edge of the first connecting surface 312 and a lower edge of the second connecting surface 322 are connected to each other. The weakening cut 33 is formed at a connection between the outer edge of the first connecting surface 312 and the upper edge of the second connecting surface 322. The weakening cut 33 according to an embodiment of the present application may be a circular arc-shaped cut formed by being depressed downward.

With the crash beam according to the embodiments of the present application, when the vehicle crashes at a low speed, the crash beam can be partially strengthened through the structure of beam support 30, thereby improving the crash performance of the crash beam to ensure the safety of the crash beam. For the crash of the vehicle at high speed, the weakening cut 33 on the beam support 30 can facilitate absorbing the crash energy; specifically, by means of the weakening cut 33, the beam support 30 can be collapsed and destroyed in a better way. Therefore, in addition to the crash box 21, the beam support 30 can also absorb part of the crash energy. On the contrary, provided that no weakening cut 33 is provided, the beam support 30 will not easily collapse in the event of a crash, in that the lower part of the crash beam is relatively hard, so that the vehicle tends to rotate with the position of the beam support 30 as a fulcrum, which makes the crash box 21 less likely to collapse and the crash beam cannot absorb the crash energy well.

Further, in order to ensure the reinforcement function of the beam support 30 in the case of a low-speed crash, the beam support 30 according to an embodiment of the present application may also be provided with a reinforcing structure. As an illustration, a first reinforcing rib 313 may be formed at a connection between the first setting surface 311 and the first connecting surface 312, and a second reinforcing rib 323 may be formed at a connection between the second setting surface 321 and the second connecting surface 322; the first reinforcing rib 313 and the second reinforcing rib 323 can be provided in multiple or partially according to actual strength requirements. The first reinforcing rib 313 and/or the second reinforcing rib 323 may be a structure formed inwardly from the surface of the connection.

The first setting surface 311 and the lower surface of the crash box 21 may be provided with mounting holes corresponding to each other, so as to enable the connection of the first part 31 onto the crash box 21 by means of bolts and the like; the second setting surface 321 and the inner surface of the crash beam body 11 may be provided with mounting holes corresponding to each other, so as to enable the connection of the second part 32 onto the crash beam body 11 by means of bolts and the like. In addition, the first part 31 and the second part 32 may be integrally formed into the beam support 30.

In another aspect, the present application further provides a vehicle including a crash beam according to embodiments of the present application.

In conclusion, the present application provides an crash beam, including: an crash beam body, extending along a width direction of a vehicle; an crash box, formed by extending inwardly along a longitudinal direction of the vehicle at both ends of the crash beam body and approximately perpendicular to the crash beam body; and a beam support, disposed below a connecting part of the crash beam body and the crash box, including a first part and a second part perpendicular to each other, wherein one end of the first part is connected to the crash box, one end of the second part is connected to the crash beam body, and the other end of the first part and the other end of the second part are connected to each other. With the crash beam according to the present application, the crash performance can be enhanced in both low-speed and high-speed crashes, and the crash beam does not need to be reinforced globally, so that the manufacturing cost can be saved while ensuring safety.

## Claims

1. A crash beam, comprising:
an crash beam body (10,11), extending along a width direction of a vehicle;
an crash box (20,21), formed by extending inwardly along a longitudinal direction of the vehicle at both ends of the crash beam body (10,11) and approximately perpendicular to the crash beam body (10,11); and
a beam support (30), disposed below a connecting part of the crash beam body (10,11) and the crash box (20,21), and comprising a first part (31) and a second part (32) perpendicular to each other, wherein an end of the first part (31) is connected to the crash box (20,21), an end of the second part (32) is connected to the crash beam body (10,11), and another end of the first part (31) and another end of the second part (32) are connected to each other wherein
the first part (31) comprises a first setting surface (311) contacting and connecting to a lower surface of the crash box (20,21), and a first connecting surface (312) extending downward from both ends of the first setting surface (311) and perpendicular to the first setting surface (311) and
the second part (32) comprises a second setting surface (321) contacting and connecting to an inner surface of the crash beam body (10,11), and a second connecting surface (322) extending inwardly from both ends of the second setting surface (321) and perpendicular to the second setting surface (321).
**characterized in that**,
the first connecting surface (312) and the second connecting surface (322) are connected to each other, and a weakening cut (33) is formed at a position where the first connecting surface (312) is connected to the second connecting surface (322).

2. The crash beam of claim 1, **characterized in that**,
a first reinforcing rib (313) is formed at a position where the first setting surface (311) is connected to the first connecting surface (312).

3. The crash beam of claim 2, **characterized in that**,
a second reinforcing rib (323) is formed at a position where the second setting surface (321) is connected to the second connecting surface (322).

4. The crash beam of claim 3, **characterized in that**,
the first setting surface (311) is connected to the lower surface of the crash box (20,21) by bolts.

5. The crash beam of claim 4, **characterized in that**,
the second setting surface (321) is connected to the inner surface of the crash beam body (10,11) by bolts.

6. The crash beam of claim 5, **characterized in that**,
the first part (31) and the second part (32) are integrally formed.

7. A vehicle, comprising the crash beam of any one of claims 1-6.

## Patentansprüche

1. Ein Crashträger, bestehend aus: einem Crashträgerkörper (10, 11), der sich entlang der Fahrzeugbreite erstreckt; einer Crashbox (20, 21), die sich an beiden Enden des Crashträgerkörpers (10, 11) entlang der Fahrzeuglängsrichtung nach innen erstreckt und etwa senkrecht zum Crashträgerkörper (10, 11) steht; und einen Träger (30), der unterhalb eines Verbindungsteils des Crashträgerkörpers (10, 11) und der Crashbox (20, 21) angeordnet ist und einen ersten Teil (31) und einen zweiten Teil (32) umfasst, die senkrecht zueinander stehen. Ein Ende des ersten Teils (31) ist mit der Crashbox (20, 21), ein Ende des zweiten Teils (32) mit dem Crashträgerkörper (10, 11) und ein weiteres Ende des ersten Teils (31) und des zweiten Teils (32) miteinander verbunden. Der erste Teil (31) umfasst eine erste Auflagefläche (311), die mit der Unterseite der Crashbox (20, 21) in Kontakt steht und mit dieser verbunden ist, sowie eine erste Verbindungsfläche (312), die sich von beiden Enden der ersten Auflagefläche (311) nach unten erstreckt und senkrecht zur ersten Auflagefläche (311) steht. Der zweite Teil (32) umfasst eine zweite Auflagefläche (321), die mit der Innenseite des Crashträgerkörpers in Kontakt steht und mit dieser verbunden ist. (10,11) und eine zweite Verbindungsfläche (322), die sich von beiden Enden der zweiten Einstellfläche (321) nach innen erstreckt und senkrecht zur zweiten Einstellfläche (321) steht. **Dadurch gekennzeichnet, dass** die erste Verbindungsfläche (312) und die zweite Verbindungsfläche (322) miteinander verbunden sind und an der Verbindungsstelle zwischen der ersten und der zweiten Verbindungsfläche (322) ein Schwächungsschnitt (33) ausgebildet ist.

2. Der Crashträger nach Anspruch 1, **dadurch gekennzeichnet, dass** eine erste Verstärkungsrippe (313) an der Verbindungsstelle zwischen der ersten Einstellfläche (311) und der ersten Verbindungsfläche (312) ausgebildet ist.

3. Der Crashträger nach Anspruch 2, **dadurch gekennzeichnet, dass** eine zweite Verstärkungsrippe (323) an der Verbindungsstelle zwischen der zweiten Einstellfläche (321) und der zweiten Verbindungsfläche (322) ausgebildet ist.

4. Der Crashträger nach Anspruch 3, **dadurch gekennzeichnet, dass** die erste Stellfläche (311) durch Schrauben mit der Unterseite der Crashbox (20, 21) verbunden ist.

5. Der Crashträger nach Anspruch 4, **dadurch gekennzeichnet, dass** die zweite Stellfläche (321) durch Schrauben mit der Innenfläche des Crashträgerkörpers (10, 11) verbunden ist.

6. Der Crashträger nach Anspruch 5, **dadurch gekennzeichnet, dass** das erste Teil (31) und das zweite Teil (32) einstückig ausgebildet sind.

7. Ein Fahrzeug, das den Crashträger nach einem der Ansprüche 1-6 umfasst.

## Revendications

1. Poutre de protection, comprenant : un corps de poutre de protection (10, 11) s'étendant dans le sens de la largeur du véhicule ; un caisson de protection (20, 21) formé par une extension vers l'intérieur le long de la direction longitudinale du véhicule aux deux extrémités du corps de poutre de protection (10, 11) et approximativement perpendiculaire à ce dernier ; et un support de poutre (30), disposé sous une pièce de liaison du corps de poutre (10, 11) et du caisson de protection (20, 21), et comprenant une première partie (31) et une seconde partie (32) perpendiculaires l'une à l'autre. Une extrémité de la première partie (31) est reliée au caisson de protection (20, 21), une extrémité de la seconde partie (32) est reliée au corps de poutre (10, 11), et une autre extrémité de la première partie (31) et une autre extrémité de la seconde partie (32) sont reliées l'une à l'autre. La première partie (31) comprend une première surface de fixation (311) en contact et en liaison avec une surface inférieure du caisson de protection (20, 21), et une première surface de fixation (312) s'étendant vers le bas depuis les deux extrémités de la première surface de fixation (311) et perpendiculaire à celle-ci. La seconde partie (32) comprend une seconde surface de fixation (321) en contact et en liaison avec une surface intérieure de la poutre. Corps (10, 11) et une seconde surface de liaison (322) s'étendant vers l'intérieur depuis les deux extrémités de la seconde surface de fixation (321) et perpendiculaire à celle-ci. **caractérisée en ce que**, la première surface de liaison (312) et la seconde surface de liaison (322) sont reliées entre elles, et une découpe d'affaiblissement (33) est formée à l'endroit où la première surface de liaison (312) est reliée à la seconde surface de liaison (322).

2. Poutre de protection selon la revendication 1, **caractérisée en ce qu'**une première nervure de renfort (313) est formée à l'endroit où la première surface de fixation (311) est reliée à la première surface de liaison (312).

3. Poutre de protection selon la revendication 2, **caractérisée en ce qu'**une seconde nervure de renfort (323) est formée à l'endroit où la seconde surface de fixation (321) est reliée à la seconde surface de liaison (322).

4. Poutre de protection selon la revendication 3, **caractérisée en ce que** la première surface de réglage (311) est reliée à la surface inférieure du caisson de protection (20, 21) par des boulons.

5. Poutre de protection selon la revendication 4, **caractérisée en ce que** la seconde surface de réglage (321) est reliée à la surface intérieure du corps de la poutre de protection (10, 11) par des boulons.

6. Poutre de protection selon la revendication 5, **caractérisée en ce que** la première partie (31) et la seconde partie (32) sont formées d'un seul tenant.

7. Véhicule comprenant la poutre de protection selon l'une quelconque des revendications 1 à 6.
